# EUROPÄISCHE PATENTANMELDUNG

(11) **EP 3 018 068 A1**
(43) Veröffentlichungstag der Anmeldung: **11.05.2016**
(21) Anmeldenummer: 15192650.8
(22) Anmeldetag: 02.11.2015
(51) Int. Cl.: B65D 51/00

(54) **VERSCHLUSS, INSBESONDERE KUNSTSTOFFVERSCHLUSS FÜR EIN BEHÄLTNIS**

(30) Priorität: 31.10.2014 DE 102014115891
(71) Anmelder: Krones AG, 93073 Neutraubling (DE)
(72) Erfinder: John-Unterburger, Ute, 93073 Neutraubling (DE); Hajek, Christian, 93073 Neutraubling (DE); Krüger, Jochen, 93073 Neutraubling (DE); Frankenberger, Günter, 93073 Neutraubling (DE)
(74) Vertreter: Bittner, Bernhard

(57) **Zusammenfassung**

Ein Verschluss, insbesondere ein Verschluss (1) für Kunststoffbehältnisse (10) mit einem Aufnahmebereich zum Aufnehmen eines Mündungsabschnitts (10a) des Behältnisses, und mit einem Anstechbereich (2), der dazu geeignet und bestimmt ist, von einer Einstecheinrichtung (120) in einer vorgegebenen Einstechrichtung (L) durchstochen und durchdrungen zu werden. Erfindungsgemäß ist der Verschluss mehrteilig ausgebildet und weist einen Grundkörper (4) auf, der an einer Mündung eines Behältnisses befestigbar ist, sowie einen an diesem Grundkörper (4) angeordneten Verschließkörper (6), der den Anstechbereich (2) ausbildet, wobei sich der Grundkörper (4) und der Verschließkörper wenigstens hinsichtlich ihrer Flexibilität in einer Einstechrichtung unterscheiden.

## Beschreibung

Die vorliegende Erfindung bezieht sich auf einen Verschluss (insbesondere einen Kunststoffverschluss) und insbesondere einen Verschluss für ein Kunststoffbehältnis. Aus dem Stand der Technik sind zahlreiche Verschlüsse für Behältnisse bekannt. Diese Verschlüsse müssen dabei unterschiedlichsten Anforderungen genügen. Aus dem Stand der Technik sind auch Behältnisse bekannt, insbesondere Großbehältnisse, welche dadurch entleert werden, dass diese zusammengedrückt werden und so die Flüssigkeit aus diesen Behältnissen herausgedrückt wird.

Auch sind insbesondere für derartige Behältnisse Verschlüsse bekannt, insbesondere auch durchstechbare Verschlüsse, welche von einem Entnahmesystem, wie beispielsweise einer Entnahmenadel, durchstochen werden können. Dabei wird im Stand der Technik der Anmelderin ein einteiliger Verschluss in einem speziell dafür vorgesehenen Bereich mit einer Hohlnadel durchstochen, um durch diese dann den Behälterinhalt abfließen zu lassen. Das Behältnis wird hierfür mechanisch komprimiert, d.h. üblicherweise werden der Behälterboden und die Mündung aufeinander zu geschoben. Dabei rollt sich die Behälterwand ein. Bevorzugt kann dabei der Boden auf die stationär angeordnete Mündung des Behältnisses zubewegt werden.

Je nach dem temperaturbedingten (und/oder auch von dem Karbonisierungsgrad abhängigen) Behältniswachstum entsteht jedoch in dem Behälter und insbesondere in dessen Kopfbereich ein unterschiedliches Kopfraumvolumen. An dem unteren Bereich bzw. an dem Bodenbereich des Behältnisses kann sich ein unterschiedlich weit nach unten verformter Behälterboden ergeben. Daneben kann der Verschluss sich auch je nach Innendruck mehr oder weniger stark nach außen wölben.

Üblicherweise wird der Behälterzustand nicht überwacht, die Anstechnadel ist nicht verfahrbar und der Komprimierungsweg ist nicht verstellbar. Je nach Ausgangszustand bleibt damit in dem Behältnis ein unterschiedliches und vor allem sehr großes Restvolumen zurück.

Eine Behälterentleeranlage nach dem Stand der Technik der Anmelderin regelt üblicherweise die Entleerung über den Druck in dem Behälter. Ein Behälterhub schaltet sich ein, wenn der Innendruck des Behältnisses abfällt und wiederum aus, sobald ein gewisser Mindestdruck wieder erreicht wird. Ist viel Gas unter hohem Druck in dem Kopfraum vorhanden, so bleibt der Hub kurz nach dem Anstechen stehen. Die Anstechnadel ist hierbei noch relativ weit von der Flüssigkeitsoberfläche entfernt. Beim Öffnen des Zapfhahns entweicht erst einmal lediglich Gas, welches zum Restentleeren nicht mehr zur Verfügung steht.

Daher besteht eine Aufgabe der Erfindung darin, hiergegen Abhilfe zu schaffen, d.h. ein anfängliches Entweichen von Gas zu verhindern oder zumindest zu reduzieren. Weiterhin rollt - wie oben erwähnt - in Folge des von Temperatur und Karbonisierungsgrad abhängig variierenden Innendrucks das Behältnis bzw. der Behälterboden unterschiedlich nach unten aus und kann mit einer definiert langen Anstechnadel nur unterschiedlich hoch entleert werden (da auch das Fülllevel sinkt). Damit liegt eine weitere Aufgabe der Erfindung auch darin, die Restentleerung zu verbessern und insbesondere, zur verbesserten Restentleerung den Abstand zum Behältnisboden und zum Fülllevel (im Grundzustand) anzupassen.

So kann das Problem auftreten, dass sich die Kunststoffverschlüsse nach dem Stand der Technik bei dem hohen Innendruck sehr stark auswölben und dadurch im Gewinde / an den Dichtlippen undicht werden. Extrem stabil/hart können die Verschlüsse aber auch nicht ausgeführt werden, da sich dann die Durchstoßstelle nicht mehr durchstoßen lässt. Somit ist es eine weitere Aufgabe der Erfindung, die Druckfestigkeit derartiger Verschlüsse zu verbessern, wobei andererseits bevorzugt eine weiche Durchstoßstelle beibehalten werden soll.

Diese Aufgaben werden erfindungsgemäß durch die Gegenstände der unabhängigen Ansprüche erreicht. Vorteilhafte Ausführungsformen und Weiterbildungen sind Gegenstand der Unteransprüche.

Ein erfindungsgemäßer Verschluss und insbesondere ein Verschluss für Kunststoffbehältnisse weist einen Aufnahmebereich zum Aufnehmen eines Mündungsabschnittes des Kunststoffbehältnisses auf. Weiterhin weist der Verschluss einen Anstechbereich auf, der dazu geeignet und bestimmt ist, von einer Einstecheinrichtung in einer vorgegebenen Richtung eingestochen und durchdrungen zu werden.

Erfindungsgemäß ist der Verschluss mehrteilig ausgebildet und weist einen Grundkörper auf, der an einer Mündung des Behältnisses befestigbar ist sowie einen an diesem Grundkörper angeordneten Verschließkörper, der den Anstechbereich ausbildet, wobei sich der Grundkörper und der Verschließkörper wenigstens hinsichtlich ihrer Flexibilität hinsichtlich einer Einstechrichtung unterscheiden.

Damit handelt es sich bevorzugt bei dem Verschluss um einen mehrteiligen Verschluss. Dieser weist in Form des Grundkörpers eine insbesondere stabile Überkappe auf, welche - insbesondere mittels eines Gewindes - an dem (Kunststoff)behältnis angeordnet werden kann und welche für die Aufnahme des Innendrucks bei möglichst geringer Eigenverformung zuständig ist. Der Verschließkörper ist dabei bevorzugt ein inneres Element, welches besonders bevorzugt aus einem weicheren Material ist als der Grundkörper und welches andererseits jedoch durch den Grundkörper bevorzugt gestützt ist und bevorzugt nur die Dichtfunktion an der Mündung des Behältnisses (innen und/oder außen und/oder am oberen Mündungsrand) erfüllt. Daneben stellt dieser Verschließkörper bevorzugt auch die ebenfalls weiche, elastische und auch anschmiegsame Durchstoßfläche für die Anstechnadel bereit.

Durch diese zweiteilige Ausführungsform kann einerseits eine hohe Stabilität erreicht werden, andererseits jedoch auch in den nötigen Bereichen die benötigte Weichheit des Materials. Bevorzugt unterscheiden sich daher der Grundkörper und der Verschließkörper wenigstens im Hinblick auf das Material, aus dem sie gefertigt sind. Bevorzugt unterscheiden sich der Grundkörper und der Verschließkörper wenigstens in einer physikalischen Eigenschaft, welche die Flexibilität dieser Elemente beeinflusst. Eine derartige Eigenschaft kann neben dem Material auch eine Stärke dieses Materials sein. Daneben wäre es auch denkbar, dass der Grundkörper und der Verschließkörper aus dem gleichen Basismaterial gefertigt sind und das Material des Grundkörpers zusätzliche Komponenten zur Verstärkung aufweist.

Bei einer bevorzugten Ausführungsform weist der (Kunststoff-)Verschluss eine Leitungseinrichtung auf, welche sich an den Anstechbereich anschließt. Dabei kann die Leitungseinrichtung an den Dichtungsbereich angespritzt oder als weiteres Teil ausgebildet sein. So kann beispielsweise diese Leitungseinrichtung als drittes Bauteil oder Element angeordnet sein und insbesondere als an dem Verschluss angeordnete rohrförmige Verlängerung. Bei dieser Leitung kann es sich beispielsweise um ein Steig- oder Saugrohr handeln, welches an der Innenseite des Verschlusses angeordnet ist, d.h. sich bei einem an dem Behältnis angeordneten Zustand in das Innere des Behältnisses erstreckt und bevorzugt auch in seiner Länge verändern kann.

Bevorzugt kann sich die Leitungseinrichtung verkürzen und/oder sich wenigstens ein Abstand (definiert in der Längsrichtung des Behältnisses) zwischen einem an dem Verschließkörper angeordneten Anfangsabschnitt und einem Endabschnitt, über welchen die zu entnehmende Flüssigkeit in die Leitungseinrichtung eintritt verändern und insbesondere unter der Einwirkung einer Kraft auf diesen Endabschnitt verändern.

Bei einer weiteren vorteilhaften Ausführungsform weist mit anderen Worten die Leitungseinrichtung einen Anfangsabschnitt auf, der sich an einen Anstechbereich anschließt, sowie ein Endabschnitt, über den Flüssigkeit in die Leitungseinrichtung gelangen kann, wobei ein Abstand zwischen dem Anfangsabschnitt und dem Endabschnitt veränderbar ist. Durch diese Veränderbarkeit kann sich auch die Länge der Leitungseinrichtung bei Kontakt etwa mit dem Behältnis des Bodens verkürzen.

Diese Flexibilität kann dabei in unterschiedlicher Weise erreicht werden. Bevorzugt ist die Leitungseinrichtung biegbar und/oder teleskopierbar und/oder faltbar. Durch diese Biegbarkeit kann beispielsweise das Ende bzw. ein Endabschnitt gegenüber dem Anfangsabschnitt verbogen und damit in seiner Position geändert werden. Bei einer teleskopierbaren Variante ist es möglich, dass die Leitungseinrichtung mehrere Segmente aufweist, die gegenüber einander verschiebbar und damit teleskopierbar sind. Bei einer faltbaren Ausführungsform wäre es möglich, dass die Leitungseinrichtung einen gefalteten Bereich aufweist, der beispielsweise durch mehrere Zickzackfaltungen verkürzt oder verlängert werden kann. Dabei kann dieser faltbare Bereich derart ausgestaltet sein, dass die Leitungseinrichtung sich stets genau in der Längsrichtung erstreckt und damit nicht die Richtung ändert. Daneben kann die Leitungseinrichtung auch einen Schlitz aufweisen, wobei sich eine längsförmige Schwachstelle / Aufreißlinie bis zu einem Ende der Leitungseinrichtung erstreckt und damit zwei Bestandteile der Leitungseinrichtung gewissermaßen aufgeklappt werden können.

Bei einer weiteren vorteilhaften Ausführungsform sind der Grundkörper und der Verschließkörper aus unterschiedlichen Materialien gefertigt. Bevorzugt ist das Material des Grundkörpers aus einer Gruppe von Materialien ausgewählt, welche einen hohen Elastizitätsmodul besitzen. Bei einer bevorzugten Ausführungsform wird für den Grundkörper PP verwendet. Der Verschließkörper ist vorzugsweise aus einem Material hergestellt, welches einerseits ein niedrigeres Elastizitätsmodul aufweist, und/oder infolge des direkten Kontaktes mit dem Inhalt des Behältnisses lebensmitteltauglich ist. Bevorzugt wird für den Verschließkörper PE als Material verwendet. Die unterschiedlichen Stabilitäten der jeweiligen Materialien können sich jedoch auch aus unterschiedlichen Materialdicken ergeben.

Bei einer weiteren vorteilhaften Ausführungsform weist der Grundkörper ein Gewinde und insbesondere ein Innengewinde auf. Mittels dieses Innengewindes kann der Grundkörper damit auf ein Außengewinde eines Behältnisses aufgeschraubt und so arretiert werden.

Bei einer weiteren vorteilhaften Ausführungsform weist der Verschließkörper ein ringförmiges Anlagesegment auf, welches an dem Grundkörper anliegt. Dieses ringförmige Anlagesegment kann dabei den Anstechbereich bevorzugt vollständig umgeben.

Vorteilhaft ist der Verschließkörper innerhalb des Grundkörpers ausgebildet. So ist es möglich, dass der Grundkörper einen beispielsweise zylinderförmigen Hohlraum ausbildet, innerhalb dessen auch der Verschließkörper angeordnet ist und innerhalb dessen bevorzugt auch ein Mündungsbereich des Behältnisses aufgenommen werden kann.

Bevorzugt liegt der Verschließkörper in einem verschlossenen Zustand des Behältnisses sowohl an dem Grundkörper als auch an einem (oberen) Mündungsrand des Behältnisses an und wird bevorzugt zwischen diesem oberen Mündungsrand des Behältnisses und dem Grundkörper eingeklemmt. Vorzugsweise ist eine radiale Breite des Verschließkörpers größer als eine radiale Breite eines Mündungsrands des zu verschließenden Behältnisses, wobei besonders bevorzugt dieser Mündungsrand des Behältnisses vollständig von dem Verschließkörper bedeckt wird. Auf diese Weise ist der Verschließkörper geeignet, die Mündung des Behältnisses vollständig abzudichten. Daher könnte der Verschließkörper auch als Dichtkörper bezeichnet werden.

Bei einer weiteren vorteilhaften Ausführungsform ist es möglich, dass der Verschließkörper auf den Grundkörper aufgesteckt ist bzw. der Grundkörper und der Verschließkörper aneinandergesteckt sind. Alternativ könnten auch beide Teile nacheinander auf den Behälter aufgebracht werden und erst auf diesem (mit oder ohne gegenseitigem Einschnappen) den funktionalen Verschluss bilden.

Bei einer weiteren vorteilhaften Ausführungsform weist der Grundkörper einen ersten ringförmigen und sich wenigstens auch in der Einstechrichtung erstreckenden Vorsprung auf und der Verschließkörper weist einen zweiten ringförmigen, sich wenigstens auch in der Einstechrichtung erstreckenden Vorsprung auf, wobei der erste Vorsprung und der zweite Vorsprung in einem Zustand, in dem der Verschließkörper an dem Grundkörper angeordnet ist, aneinander anliegen.

Durch diesen bevorzugt flächigen Kontakt kann ein Halt zwischen dem Grundkörper und dem Verschließkörper erreicht werden. Vorteilhaft liegen diese beiden Vorsprünge entlang einer zylinderförmigen Fläche oder Wand oder einer kegelstumpfförmigen Fläche oder Wand aneinander an. Bevorzugt sind diese beiden Vorsprünge in einer radialen Richtung des Verschlusses nebeneinander angeordnet, d.h. der eine ringförmige Körper umgibt ringförmig den zweiten ringförmigen Körper. Daneben wäre es auch möglich, dass die Vorsprünge schräg zur Einstechrichtung verlaufen. Bei der genannten Einstechrichtung handelt es sich bevorzugt auch um eine Längsrichtung des Behältnisses.

Bei einer weiteren vorteilhaften Ausführungsform weist der Verschließkörper einen dritten, sich wenigstens auch in der Einstechrichtung erstreckenden Vorsprung auf. Bevorzugt ist dabei der ringförmige Körper des Grundkörpers zwischen den beiden Vorsprüngen des Verschließkörpers angeordnet und insbesondere eingeklemmt. Dabei ist mit anderen Worten der erste Vorsprung zwischen dem zweiten Vorsprung und dem dritten Vorsprung angeordnet. Es wäre jedoch auch möglich, dass an dem Grundkörper zwei Vorsprünge angeordnet sind, zwischen denen ein Vorsprung des Verschließkörpers, eingreifen kann.

Vorteilhaft sind durch diese beschriebenen Vorsprünge der Grundkörper und der Verschließkörper kraft- und/oder formschlüssig miteinander verbunden. Bei einer weiteren vorteilhaften Ausführungsform weist der Verschließkörper auch eine umlaufende Dichtlippe auf, welche sich wenigstens teilweise auch in der Längsrichtung des Behältnisses erstreckt und welche sich bevorzugt in einem verschlossenen Zustand des Behältnisses an eine Innenwandung einer Mündung des Behältnisses anlegt. Diese Dichtlippe ist dabei bevorzugt einteilig mit dem Verschließkörper ausgebildet. Alternativ kann der Verschluss auch zwei Dichtlippen aufweisen, eine für innen, eine für außen an der Mündung.

Bei einer weiteren vorteilhaften Ausführungsform weist der Kunststoffverschluss ein Arretiermittel auf, welches in wenigstens einer Position der Einstecheinrichtung gegenüber dem Kunststoffverschluss eine Relativbewegung der Einstecheinrichtung gegenüber dem Kunststoffverschluss in einer vorgegebenen Bewegungsrichtung und insbesondere in einer Richtung entgegen der Einstechrichtung (d.h. einer Rückwärtsbewegung) verhindert.

Durch diese Ausgestaltung wird erreicht, dass bedingt beispielsweise durch einen Gegendruck innerhalb des Behältnisses die Einstecheinrichtung nicht wieder aus dem Behältnis herausgedrückt werden kann. In dem Anstechbereich kann je nach Druck und Temperatur eine mehr oder weniger starke Durchwölbung auftreten. Dies wird wiederum dadurch bedingt, dass beim An- und Durchstich des Verschlusses unterschiedliche Bedingungen herrschen können und auch diese unterschiedlichen Bedingungen bzw. Parameter zu Undichtigkeiten führen können. Während des Anstechens ändert sich der Innendruck und diese Durchwölbung des Verschlusses gegebenenfalls, insbesondere nimmt dieser Innendruck zunächst ab. Auf diese Weise kann es vorkommen, dass die Einstecheinrichtung z.B. die Einstichnadel wieder etwas aus dem Behältnis herausgezogen wird.

Auch bei dieser bevorzugten Ausführungsform weist der oben erwähnte Verschließkörper bevorzugt Dichtlippen zum Abdichten der Mündung des Behältnisses auf sowie die auch oben erwähnte Durchstoßfläche bzw. den Anstechbereich, der sich bevorzugt auch hier elastisch an die Einstecheinrichtung anschmiegen kann.

Bei einer weiteren vorteilhaften Ausführungsform ist das erwähnte Arretiermittel an dem Grundkörper ausgebildet. So kann beispielsweise das Arretiermittel als ein die Einstecheinrichtung umgebender ringförmiger Abschnitt ausgebildet sein, der besonders bevorzugt von wenigstens einem Vorsprung der Einstecheinrichtung hintergriffen werden kann. So kann beispielsweise die Einstecheinrichtung einen umlaufenden sägezahnartigen Vorsprung aufweisen, der das besagte Arretiermittel an dem Grundkörper hintergreifen kann. Da der Grundkörper relativ stabil ausgeführt ist, kann auf diese Weise ein Zurückziehen oder Zurückdrücken der Einstecheinrichtung verhindert und damit die beschriebene Arretierung erreicht werden.

Vorteilhaft ist damit das Arretiermittel als Rastring und insbesondere als scharfe Innenkante einer (bevorzugt mittleren bzw. zentral angeordneten) Öffnung des Grundkörpers ausgebildet. An diesem Rastring kann sich die Einstecheinrichtung mit Wiederhaken verhaken. Damit ist, wie oben erwähnt, ein Herausziehen bzw. -wandern der Einstecheinrichtung während des Entleer - Prozesses nicht mehr möglich.

Die vorliegende Erfindung ist daher auch auf einen Verschluss der oben bezeichneten Art in Verbindung mit einer Einstecheinrichtung gerichtet. Dabei weist bevorzugt der Verschluss ein Arretiermittel auf, welches eine Relativbewegung der Einstecheinrichtung gegenüber dem Verschluss in einer vorgegebenen Bewegungsrichtung verhindert. Es wird darauf hingewiesen, dass das hier beschriebene Arretiermittel auch unabhängig von der oben beschriebenen Erfindung beansprucht werden kann und insbesondere auch unabhängig davon, ob der Verschluss zweiteilig ausgeführt ist.

Die Anmelderin behält sich daher vor, Schutz zu beanspruchen auf einen Verschluss für Behältnisse, der einen Einstechbereich zum Durchführen einer Einstecheinrichtung aufweist so wie ein Arretiermittel, welches nach dem Einstecken der Einstecheinrichtung eine Rückwärtsbewegung der Einstecheinrichtung gegenüber dem Verschluss verhindert. Zu diesem Zweck kann beispielsweise der Grundkörper einen Einstechbereich mit einer geringeren Materialdicke aufweisen, der entsprechend weicher bzw. flexibler ist als der übrige Bereich des Grundkörpers. Insbesondere ist bei dieser Ausgestaltung an der Einstecheinrichtung selbst ein weiteres Arretiermittel bzw. ein Einhakmittel vorgesehen.

Dieses Einhakmittel kann, wie oben erwähnt, als umlaufender Vorsprung ausgebildet sein und insbesondere als umlaufender Vorsprung der das Arretiermittel des Verschlusses hintergreifen kann. Vorteilhaft erweitert sich ein derartig umlaufender Vorsprung an der Einstecheinrichtung in der Längsrichtung dieser Einstecheinrichtung und insbesondere entgegen der Längsrichtung der Einstechrichtung.

Bevorzugt weist die Vorrichtung bzw. der Behältnisverschluss eine Führungseinrichtung zum Führen der Einstecheinrichtung auf. Diese Führungseinrichtung kann dabei im Inneren des verschlossenen Behältnisses angeordnet sein und sich dort insbesondere in der Längsrichtung der Einstechrichtung erstrecken. Bevorzugt ist die Führungseinrichtung als kanalartiger Körper ausgeführt, durch den die Einstecheinrichtung gesteckt werden kann. Dabei ist bevorzugt ein Innenquerschnitt der Führungseinrichtung an einen Außenquerschnitt der Einstecheinrichtung angepasst.

Bevorzugt ist diese Führungseinrichtung an dem Verschließkörper ausgebildet. Bevorzugt ist die Führungseinrichtung zumindest geringfügig beabstandet zu dem Anstechbereich angeordnet. Diese Führungseinrichtung kann dabei eine Stabilität der Einstecheinrichtung gegenüber dem Verschluss erhöhen. Vorzugsweise weist diese Führungseinrichtung in der Einstechrichtung eine Länge von wenigstens 3mm, bevorzugt von wenigstens 5mm, bevorzugt von wenigstens 1cm und besonders bevorzugt von wenigstens 1,5cm auf. Auch diese Führungseinrichtung kann bei eingeschobener Einstecheinrichtung umfänglich an der Einstecheinrichtung anliegen.

Bei einer weiteren vorteilhaften Ausführungsform ist die Einstecheinrichtung selbst mehrteilig und insbesondere zweiteilig ausgeführt. Bevorzugt ist die Einstecheinrichtung wenigstens zweiteilig ausgeführt und besonders bevorzugt derart ausgeführt, dass bei einem Abziehen der Einstecheinrichtung ein Teil bzw. Abschnitt, insbesondere der untere Teil der Einstecheinrichtung, an bzw. in dem Verschluss verbleibt und so eine Weiter- oder Wiederverwendung der Einstecheinrichtung bzw. des Verschlusses nicht möglich ist.

Durch das hier beschriebene Rastmittel bzw. das Arretiermittel können eine verbesserte Dichtigkeit an den Dichtlippen sowie auch gleichmäßigere geometrische Bedingungen im Anstechbereich erreicht werden. Durch insbesondere das Einhaken kann eine Bewegungsmöglichkeit der Einstecheinrichtung bzw. Nadel aus dem Behältnis heraus verhindert werden und damit können auch Undichtigkeiten während des Entleervorgangs verhindert werden. Durch das hier erwähnte Abreißen- bzw. die zweiteilige Ausbildung der Einstecheinrichtung kann auch eine Qualitätssicherung durch Vermeidung einer Weiter- und Wiederverwendung hygienerelevanter Teile erreicht werden. Auch wäre es möglich, dass die Einstecheinrichtung eine Sollreiß- bzw. Sollbruchstelle aufweist, so dass nach dem Entleervorgang, wie oben erwähnt, ein Teil der Einstecheinrichtung an dem Verschluss verbleibt.

Um diese Zweiteiligkeit der Einstecheinrichtung zu erreichen wäre es beispielsweise möglich, dass ein Teil bzw. Abschnitt der Einstecheinrichtung einen Aufnahmeabschnitt bzw. eine Ausnehmung aufweist, in welche wiederum ein Vorsprung des anderen Teils bzw. Abschnitts der Einstecheinrichtung eingeschoben werden kann. Dabei kann durch entsprechende Dichtmittel sichergestellt werden, dass das zu entnehmende Medium, beispielsweise Bier, durch beide Teile der Einstecheinrichtungen hindurchgeführt werden kann.

So könnte beispielsweise derjenige Teil der Einstecheinrichtung, der in den anderen Teil eingeschoben wird, umlaufende Dichtmittel wie beispielsweise O-Ringe aufweisen, die eine entsprechende Abdichtung bewirken. Weiter wäre es auch möglich, dass einer der beiden Teile bzw. Abschnitte der Einstecheinrichtungen - insbesondere wenigstens teilweise umlaufende - Vorsprünge aufweist, die bevorzugt in entsprechende Ausnehmungen des anderen Teil eingreifen können, sodass eine bestimmte Stabilität erreicht werden kann.

Durch eine entsprechende Auswahl der beteiligten Materialien kann bestimmt werden, in Folge von welchen Kräften eine Trennung der beiden Teile der Einstecheinrichtung erreicht wird. Bei einer weiteren vorteilhaften Ausführungsform wäre es möglich, dass die Einstecheinrichtung derart ausgeprägt ist, das lediglich derjenige Teil mit dem Behältnis bzw. mit dem Behältnis Verschluss in Kontakt kommt, der nach einem Abziehen des jeweils anderen Teils an dem Verschluss bleiben soll. Daneben wäre es auch möglich, dass ein Teil der Einstecheinrichtung vollständig in den Verschluss geführt wird und auch der andere Teil mit einem beispielsweise an dem Verschluss angeordneten Sicherungsmittel zusätzlich gesichert wird.

Die vorliegende Erfindung ist daher weiterhin auf eine Zapfanordnung zum Entnehmen von Flüssigkeiten aus Behältnissen gerichtet, welche ein Behältnis mit einem daran angeordneten Behältnis - Verschluss aufweist, so wie eine Einstecheinrichtung, welche in den Verschluss einführbar ist, wobei der Verschluss die oben erwähnten Arretiermittel aufweist, welche ein Zurückziehen zumindest der vollständigen Einstecheinrichtung, insbesondere während eines Entnahmevorgangs zum Entnehmen von Flüssigkeit aus dem Behältnis verhindert.

Bei weiteren vorteilhaften Ausführungsformen ist der oben erwähnte Anstechbereich wenigstens abschnittsweise oberhalb einer Außenoberfläche des Grundkörpers angeordnet. Hierbei wird insbesondere Bezug genommen auf ein aufrecht stehendes Behältnis, an dem der Verschluss angeordnet ist. Im Gegensatz zu den oben beschriebenen Ausführungsformen kann hier der Anstechbereich höher liegen als die Oberfläche des Grundkörpers. Mit anderen Worten kann der Anstechbereich gegenüber einem diesen umgebenden Bereich des Grundkörpers wenigstens geringfügig herausragen. So ist es möglich, dass der Anstechbereich oberhalb einer durch den Grundkörper gebildeten Ebene verläuft. Es wäre aber auch möglich, dass der Grundkörper selbst trichterförmig ausgebildet ist und der Einstechbereich aus diesem trichterförmigen Abschnitt wenigstens geringfügig herausragt.

Zusätzlich wird auch darauf hingewiesen, dass diese Ausführungsform auch für einen einteiligen Verschluss denkbar wäre. So könnte auch hier wieder der Anstechbereich aus einem dünneren Material hergestellt sein und gegenüber anderen Bereichen des Verschlusses herausragend bzw. hervorstehend ausgebildet sein.

Die Anmelderin behält sich daher auch vor, Schutz für einen Verschluss zu beanspruchen, der insbesondere zumindest teilweise unterschiedliche Materialdicken und/oder Festigkeiten aufweist, wobei auch hier ein Anstechbereich gegenüber anderen Bereichen des Verschlusses nach außen hin versetzt ist.

Üblicherweise werden die hier beschriebenen Behältnisse mit Bieren oder bierähnlichen Getränken gefüllt. Nach dem Befüllen wird das Behältnis vor dem Verschließen definiert zusammengedrückt, um am Mündungsausgang eine Schaumkrone zu erzeugen. Damit soll erreicht werden, dass möglichst wenig Kopfraum mit Sauerstoff ausgefüllt wird. Hierbei kann jedoch auch Flüssigkeit überschwappen und auf den Behälter laufen. Auch bei dem eigentlichen Füllvorgang besteht die Möglichkeit bzw. die Gefahr, dass Füllgut auf den Behälter gelangt.

Aus diesem Grunde werden die Behältnisse im Anschluss an das Verschließen und vor dem Verpacken abgeschwallt, das heißt das Behältnis erfährt eine Art Dusche, üblicherweise mit Wasser, um ihn von Füllgutrückständen zu befreien. Die derzeit verwendeten Verschlüsse sind jedoch derart aufgebaut, dass der Anstechbereich bzw. eine Durchstechmembran sich in einer Vertiefung des Verschlusses befindet. Dieser Bereich wird auch nicht von einer Überkappe abgedeckt. Es kann teilweise dazu kommen, dass sich in diesem Bereich bzw. dieser Vertiefung Flüssigkeit ansammelt, die von alleine nicht mehr ablaufen kann. Aber auch auf der Überkappe sammelt sich Flüssigkeit, da diese nach innen hin schräg zulaufend sein kann. Diese Ansammlung von Flüssigkeit kann jedoch einen Nährboden für Bakterien und Schimmel und dergleichen bilden.

Auch andere Verunreinigungen können sich in diesem Anstechbereich festsetzen und lassen sich nicht ohne weiteres entfernen. Dieser Effekt wird weiterhin dadurch verstärkt, dass eine Verpackung für die Behältnisse vorgesehen sein kann. Über den Verschluss wird eine Folie gespannt welche ein Austrocknen der überschüssigen Flüssigkeit erschwert. Auf diese Weise können Verunreinigungen dann durch den Anstechvorgang in das Getränk gelangen und können sogar gesundheitliche Beschwerden hervorrufen.

Bei der hier beschriebenen Ausführungsform wird daher vorgeschlagen, dass der Ansteckbereich gegenüber dem Grundkörper des Behältnisses herausragt. Mit anderen Worten ist der Anstechbereich so ausgeführt, dass dieser bzw. die Durchstechmembran sich nicht im "Inneren" des Verschlusses befindet sondern vollständig außerhalb.

Insbesondere handelt es sich, wie oben erwähnt, um einen zweiteiligen Verschluss, der einen Grundkörper und einen Verschließkörper aufweist, wobei dieser Verschließkörper eine Ansammlung von Flüssigkeiten und Verunreinigungen usw. verhindert.

Der Verschließkörper bzw. das Inlay weist, wie hier erwähnt, einen Absatz auf, an dem sich bevorzugte Grundkörper anschmiegt und so den Bereich in das Innere zusätzlich abdichtet. Damit liegt bevorzugt der Einstechbereich in jeden Fall etwas höher als die höchste Kante des Grundkörpers. Auf diese Weise ist gewährleistet, dass der Anstechbereich in jedem Fall nicht von Flüssigkeiten bedeckt wird. Bevorzugt ist der Anstechbereich auch nach außen hin gewölbt, sodass Flüssigkeiten ablaufen können.

Bei einer bevorzugten Ausführungsform kann auch die Außenoberfläche des Grundkörpers nach außen und/oder innen trichterförmig gewölbt sein. Der Anstechbereich kann aus diesem trichterförmigen Bereich herausragen.

Bei einer weiteren vorteilhaften Ausführungsform weist der Grundkörper eine Öffnung auf, welche zur Durchführung der Einstecheinrichtung geeignet und bestimmt ist und wenigstens ein Abschnitt des Verschließkörpers erstreckt sich durch diese Öffnung hindurch.

Bei dieser bevorzugten Ausführungsform weißt damit der Grundkörper bzw. die Überkappe insbesondere in deren Mitte eine Aussparung auf durch welche der Verschließkörper hindurchgeführt wird. Dabei kann der innerste Bereich dieses Verschließkörpers bevorzugt als sehr dünne Dichtlippe ausgeführt sein, welche sich an dem Verschließkörper anschmiegt und so zusätzlich abdichtet. Um ein noch besseres Dichtungsergebnis zu erzielen, kann auch der Durchmesser dieser Dichtlippe entsprechend kleiner sein als der Außendurchmesser des Absatzes des Verschließkörpers. Auf diese Weise kann eine Ansammlung von Flüssigkeiten, Bakterien, Schimmel und Verunreinigungen im Anstechbereich verhindert werden. Auf diese Weise kann die Hygiene der Behältnisse erhöht und auch ein Gesundheitsrisiko vermindert werden.

Insbesondere handelt es sich bei dem Abschnitt des Verschließkörpers um einen Verbindungsabschnitt der den Anstechbereich mit anderen - insbesondere innerhalb des Grundkörpers liegenden Abschnitten - verbindet. Dieser Abschnitt kann dabei als im Wesentlichen zylinderförmiger Bereich ausgeführt werden, der sich durch die besagte Öffnung in dem Grundkörper hindurch erstreckt. Dabei kann dieser Bereich sich bevorzugt auch entgegen der Einstechrichtung leicht verjüngen.

Weiterhin kann dieser Übergangsabschnitt einen Kragen bzw. umlaufenden Vorsprung aufweisen. Dieser Vorsprung kann an einem Abschnitt des Grundkörpers anliegen und insbesondere dichtend und/oder umlaufend anliegen. Damit kann auch ein Dichtungsbereich zwischen dem Grundkörper und dem Verschließkörper vorgesehen sein.

Bevorzugt ist der Verschluss rotationssymmetrisch und besonders bevorzugt kreisförmig ausgebildet. Bevorzugt sind auch der Grundkörper und/oder der Verschließkörper jeweils rotationssymmetrisch und/oder kreisförmig ausgebildet.

Die vorliegende Erfindung ist weiterhin auf ein Kunststoffbehältnis mit einem daran angeordneten (Kunststoff-)Verschluss der oben beschriebenen Art gerichtet, wobei das Kunststoffbehältnis in seiner Längsrichtung komprimierbar ist, um durch eine derartige Kompression in dem Kunststoffbehältnis befindliche Flüssigkeit aus dem Behältnis zu drängen.

Bevorzugt ist das Behältnis faltbar und besonders bevorzugt ist ein Mündungsabschnitt des Behältnisses in den Grundkörper einführbar. Dabei kann das Behältnis insbesondere entlang einer umlaufenden Faltkante faltbar sein.

Bei einer weiteren vorteilhaften Ausführungsform weist der Verschluss eine Verstärkungseinrichtung auf, die in der Einstechrichtung versetzt zu dem Anstechbereich angeordnet ist und geeignet ist, die durch den Anstechbereich der Einstecheinrichtung beim Einstechvorgang entgegenwirkende Kraft zu vergrößern. Diese Einrichtung kann dabei beispielsweise in dem Dichtkörper bzw. Verschließkörper angeordnet sein.

Weitere Vorteile und Ausführungsformen ergeben sich aus den beigefügten Zeichnungen:
Darin zeigen:
   - Fig. 1a - 1c: drei Darstellungen eines Behältnisses nach dem Stand der Technik;
   - Fig. 2: eine Darstellung eines Behältnisses mit einem erfindungsgemäßen Verschluss in einer ersten Ausführungsform;
   - Fig. 3: das Behältnis aus Figur 2 in einem anderen Zustand, d.h. in einer anderen Position;
   - Fig. 4: eine erste Darstellung eines erfindungsgemäßen Verschlusses;
   - Fig. 5: eine Darstellung eines Grundkörpers eines erfindungsgemäßen Verschlusses;
   - Fig. 6: eine Darstellung eines Verschließkörpers für einen erfindungsgemäßen Verschluss;
   - Fig. 7: eine weitere Darstellung eines erfindungsgemäßen Verschlusses in einer weiteren Ausführungsform;
   - Fig. 8a, 8b: zwei schematische Darstellungen des in Fig. 7 gezeigten Verschlusses;
   - Fig. 9: eine Darstellung einer weiteren Ausführungsform eines erfindungsgemäßen Verschlusses;
   - Fig. 10a - 10c: drei Darstellungen des Verschlusses aus Fig. 9 in unterschiedlichen Ausführungsformen;
   - Fig. 11: eine weitere Ausführungsform eines erfindungsgemäßen Verschlusses;
   - Fig. 12a, 12b: zwei Darstellungen des Verschlusses in unterschiedlichen Positionen;
   - Fig. 13: eine weitere Ausgestaltung eines erfindungsgemäßen Verschlusses;
   - Fig. 14a, 14b: zwei Darstellungen des Verschlusses aus Fig. 13 in unterschiedlichen Betriebspositionen;
   - Fig. 15: eine weitere Ausführungsform der vorliegenden Erfindung mit Arretiermittel an dem Verschluss;
   - Fig. 16: eine Darstellung aus Figur 15 bei in dem Verschluss eingeschobener Einstecheinrichtung;
   - Fig. 17: eine weitere Ausführungsform der Erfindung mit zweiteiliger Einstecheinrichtung;
   - Fig. 18: die Darstellung aus Figur 17 wobei ein Teil der Einstecheinrichtung abgezogen wurde;
   - Fig. 19a, 19b: eine weitere Ausführungsform eines erfindungsgemäßen Verschlus ses;
   - Fig. 20a - 20c: Darstellungen eines Verschließkörpers für den in Figur 19a, 19b gezeigten Verschluss;
   - Fig. 21a, 21b: zwei Darstellungen eines Grundkörpers des in Figur 19 gezeigten Verschlusses; und
   - Fig. 22a - 22c: drei Schnittdarstellungen eines entsprechenden Verschlusses.

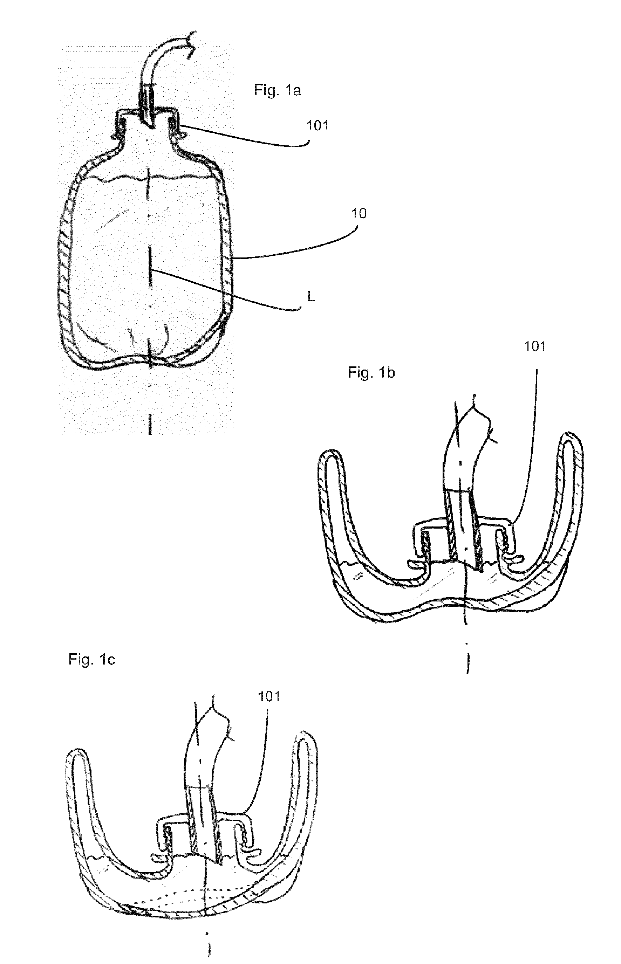

Figur 1a zeigt ein Behältnis 10 mit einem Verschluss 101 nach dem Stand der Technik. Dieser Verschluss ist dabei - wie an sich bekannt - auf die Mündung des Behältnisses aufgeschraubt. Gleichzeitig weist dieser Verschluss einen Einstechbereich auf, in den eine Einstechnadel 120 einführbar ist. Das Behältnis 10 ist entlang seiner Längsrichtung L komprimierbar. Auf diese Weise kann die Flüssigkeit aus dem Behältnis durch die Nadel hindurch herausgepresst werden.

Figur 1b zeigt einen Zustand, in dem das Behältnis nahezu vollständig komprimiert ist. Man erkennt, dass hier ein großer Teil an Restflüssigkeit für die Nadel bzw. das Saugrohr nicht erreichbar ist. Genauer bleibt in Folge der relativ kurzen Nadelhöhe unterhalb der Nadelöffnung ein Behälterinhalt zurück. Wenn sich - wie hier (Fig. 1 b) dargestellt - der Behälterboden durch den steigenden Innendruck nach unten durchwölbt, bleibt sogar (vgl. Fig. 1 c) noch mehr Flüssigkeit in dem Behältnis und kann nicht entnommen werden.

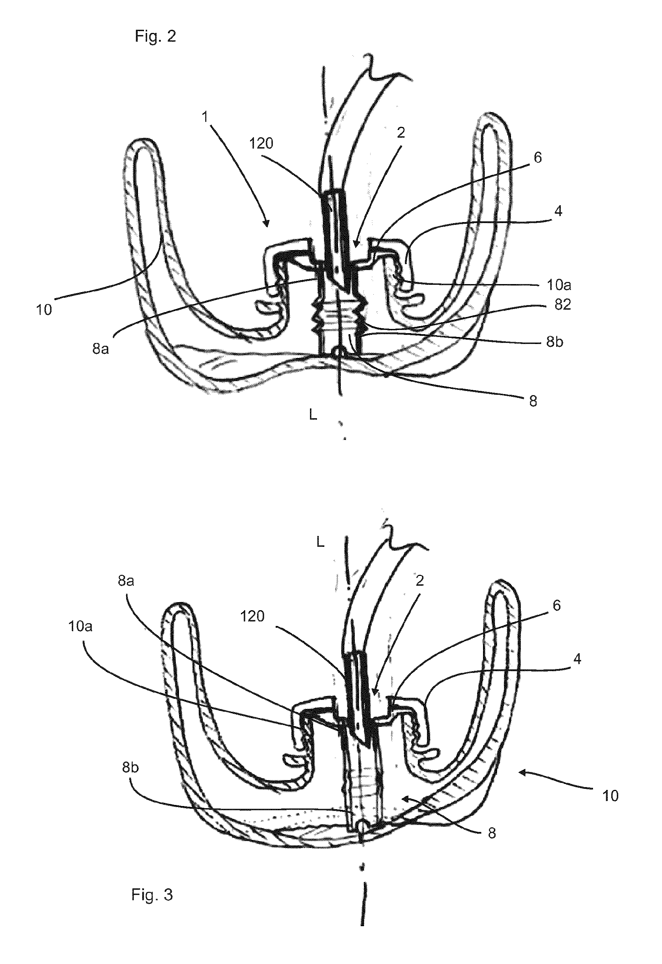

Figur 2 zeigt eine erste schematische Darstellung eines Behältnisses mit einem erfindungsgemäßen Verschluss. Man erkennt, dass dieser Verschluss einen Grundkörper 4 aufweist, der über ein Innengewinde an einer Mündung 10a des Behältnisses 10 angeschraubt ist. Es wäre jedoch auch möglich, dass der Verschluss in anderer Weise an dem Behältnis befestigt ist. So könnte er beispielsweise an der Mündung angeklippt oder dort aufgeschnappt sein.

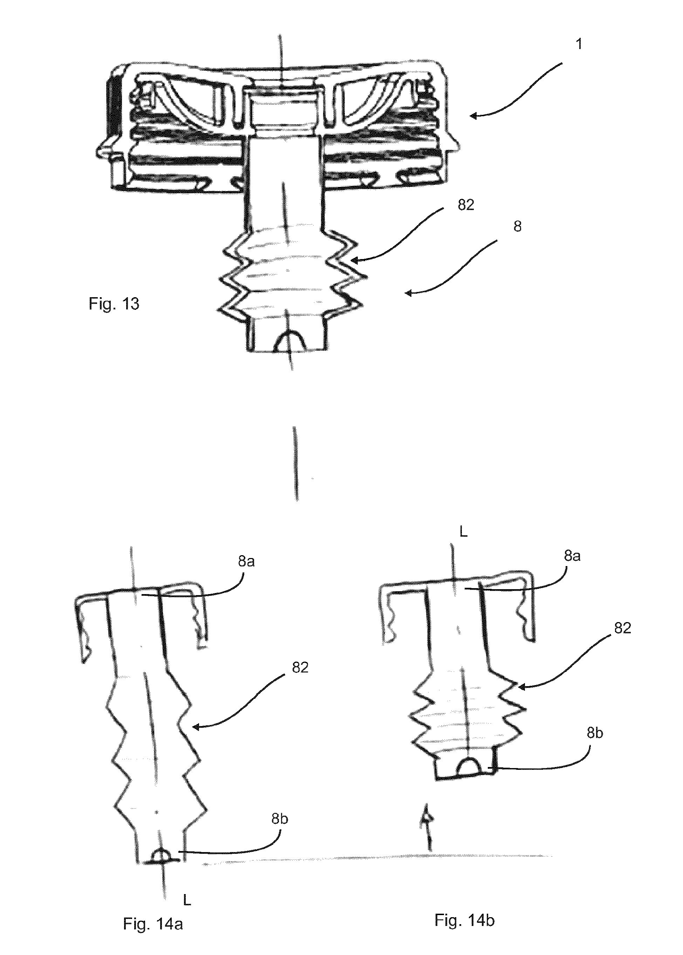

An diesem Grundkörper wiederum ist ein Verschließkörper 6 ausgebildet, der auch den Anstechbereich 2 ausbildet, über den die Anstechnadel 120 eines Zapfwerkzeuges eingeführt werden kann. An diesen Verschließkörper 6 schließt sich die mit 8 gekennzeichnete Leitungseinrichtung an, welche dann in das Innere des Behältnisses ragt. Diese Leitungseinrichtung 8 weist hier einen faltbaren Bereich 82 auf (vgl. Figur 13 ), wobei Figur 3 einen Grundzustand zeigt, in dem der Bereich 82 nicht gefaltet ist und Figur 2 einen Zustand, in dem der Bereich 82 gefaltet ist. Damit hat die Leitungseinrichtung stets eine Überlänge und reicht damit bei allen Bodenabständen bis zum Boden. Insbesondere ist die Leitungseinrichtung 82 so lang gewählt, dass sie stets in die Oberfläche der Flüssigkeit eintaucht oder kurz darüber steht (im nicht-komprimierten bzw. gefüllten + verschlossenen Zustand des Behältnissen → Füllstand).

Die Bezugszeichen 8a und 8b beziehen sich auf Anfangs- bzw. Endabschnitte der Leitungseinrichtung. Dabei gelangt über den Endabschnitt 8b die Flüssigkeit in die Leitungseinrichtung. Unter dem Endabschnitt wird damit im Folgenden derjenige Abschnitt der Leitungseinrichtung verstanden, ab dem die Flüssigkeit in einer Umfangsrichtung, welche zu der Strömungsrichtung der Flüssigkeit senkrecht steht, vollständig von dem Material der Leitungseinrichtung umgeben ist.

Figur 3 zeigt - wie erwähnt - einen Zustand kurz bevor die Leitungseinrichtung in dem Bereich 82 gefaltet wird. Das Bezugszeichen L bezieht sich auf eine Längsrichtung der Leitungseinrichtung, welche mit einer Längsrichtung des Behältnisses zusammenfällt sowie auch mit der Richtung, entlang derer das Behältnis komprimiert wird.

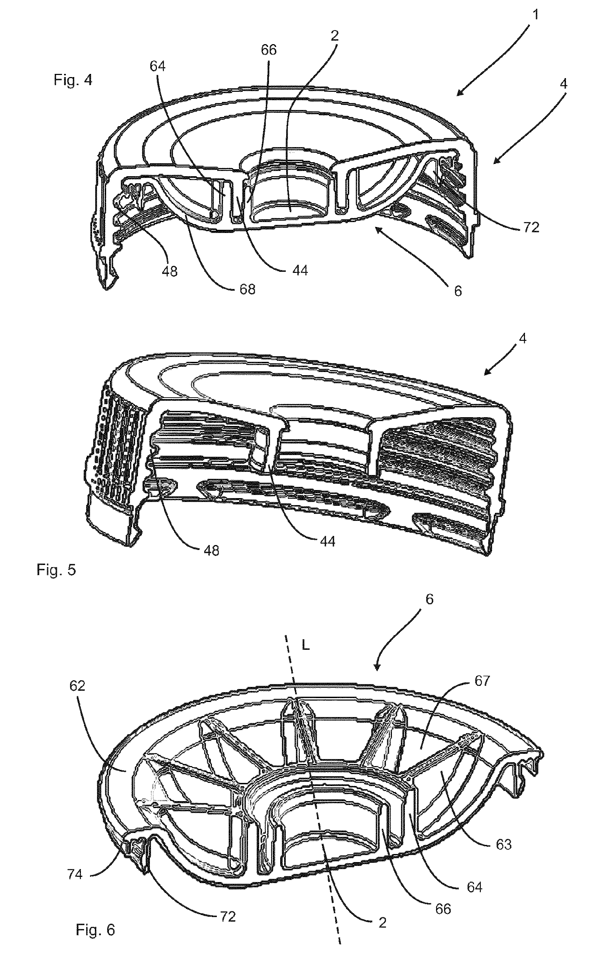

Figur 4 zeigt eine Darstellung eines Kunststoffverschlusses im Detail. Dabei ist wiederum der Grundkörper 4 dargestellt, der über das Innengewinde 48 an dem Außengewinde des Behältnisses angeschraubt wird. Weiterhin weist dieser Grundkörper 4 einen umlaufenden Vorsprung bzw. Steg 44 auf, der hier in der Längsrichtung L nach unten ragt. Dieser Vorsprung bzw. Steg greift wiederum zwischen zwei entsprechend nach oben ragende Vorsprünge bzw. Stege 64 und 66 des Verschließkörpers 6 ein. Auf diese Weise kann der Verschließkörper 6 an dem Grundkörper 4 gehalten werden. Das Bezugszeichen 68 kennzeichnet einen gekrümmten Bereich, der in einem auf das Behältnis aufgeschraubten Zustand ebenfalls durch die Mündung zumindest geringfügig in das Behältnis hineinragt. Bei hoher Druckbelastung wirkt dieser Bereich 68 dem Innendruck entgegen und verhindert die Durchwölbung nach außen.

Alternativ zum Einrasten der beiden Teile an dem umlaufenden Vorsprung 44 mit den Stegen 64 und oder 66, kann der Verschließkörper auch mit seinem Außendurchmesser in einer kleinen dafür vorgesehenen Ringnut des Grundkörpers einrasten

Das Bezugszeichen 72 bezieht sich auf einen umlaufenden Vorsprung bzw. eine Dichtlippe, die ebenfalls an dem Verschließkörper 6 angeordnet ist. Das Bezugszeichen 74 (Figur 6) bezieht sich auf einen weiteren ringförmigen Vorsprung, der radial außerhalb der Dichtlippe angeordnet ist. Dieser weitere ringförmige Vorsprung liegt in einem verschlossenen Zustand des Behältnisses ebenfalls an einem Außenumfang eines Endes der Mündung des Behältnisses an. Auf diese Weise wird bevorzugt das obere Ende (d.h. insbesondere ein oberhalb des Gewindes liegender Bereich) des Mündungsrandes des Behältnisses ausschließlich von dem Verschließkörper kontaktiert und abgedichtet.

Der Grundkörper bewirkt jedoch vorteilhaft, dass der umlaufende Vorsprung von radial außen her an den Mündungsrand des Behältnisses angedrückt wird.

Figur 5 zeigt eine Darstellung des Grundkörpers 4. Man erkennt auch hier wieder das Innengewinde 48 sowie den umlaufenden Vorsprung 44. Wie oben erwähnt, ist das Material dieses Grundkörpers relativ steif ausgewählt, so dass es sich insbesondere nicht unter auch einem höheren Innendruck des Behältnisses verformt. Damit handelt es sich hier bei dem Grundkörper 4 um eine stabile Überkappe mit einem Gewinde, die auch für die Aufnahme des Innendrucks bei möglichst geringer Eigenverformung zuständig ist. Des Weiteren verläuft die Grundfläche (oben) des Grundkörpers nach innen hin schräg. Dies wirkt ebenfalls dem Innendruck entgegen.

Figur 6 zeigt eine Detaildarstellung des Verschließkörpers 6. Dabei sind auch hier wieder die beiden umlaufenden Vorsprünge 64 und 66 gezeigt, wobei erkennbar ist, dass der radial innenliegende Vorsprung 66 kürzer ist als der radial außenliegende Vorsprung 64. Weiterhin sind Stege 63 erkennbar, welche den Vorsprung 64 mit einem umlaufenden Ringkörper 67 verbinden. Diese Stege dienen dabei zur Stabilisierung. Das Bezugszeichen 62 kennzeichnet ein ringförmiges Anlegesegment, mit dem der Verschließkörper an den Grundkörper angelegt wird und in einem verschlossenen Zustand zwischen dem Grundkörper und einer Mündung des Behältnisses eingeklemmt wird. Das Bezugszeichen 2 kennzeichnet wiederum den Anstechbereich, durch den hindurch die Lanze bzw. Anstechnadel in das Behältnis einführbar ist.

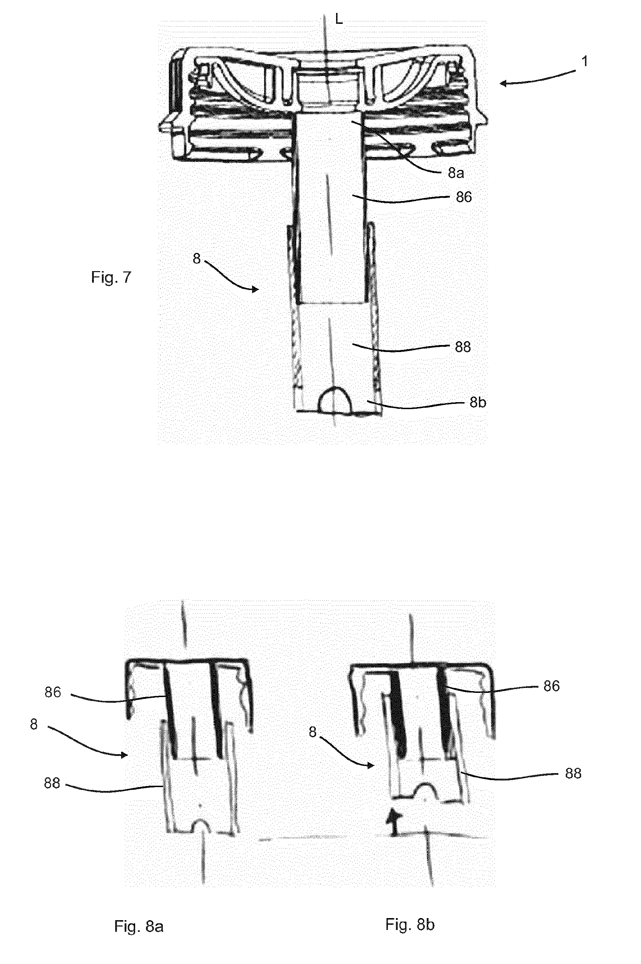

Die nachfolgenden Figuren 7 - 14 zeigen unterschiedliche Ausgestaltungen der Leitungseinrichtung. Die Verschlusskappe, d.h. der Grundkörper 4 und der Verschließkörper 6 können jeweils in der gleichen Weise ausgebildet sein wie in den Figuren 5 und 6 gezeigt, so dass hierauf nicht konkreter eingegangen wird.

Bei der in Figur 7 gezeigten Ausgestaltung ist die Leitungseinrichtung 8 teleskopartig ausgebildet, d.h. sie weist einen ersten Abschnitt 86 sowie einen zweiten Abschnitt 88 auf, wobei der zweite Abschnitt 88 in der Richtung L gegenüber dem ersten Abschnitt 86 verschiebbar ist. Auf diese Weise kann ebenfalls die Leitungseinrichtung 8 bei Anschlag an dem Boden des Behältnisses verkürzt werden. Die Figuren 8a und 8b zeigen entsprechend grob schematisch zwei unterschiedliche Zustände der Leitungseinrichtung. Bei der in Fig. 7 gezeigten Ausführungsform ist der zweite Abschnitt 88 außerhalb des ersten Abschnitts 86 angeordnet. Es wäre jedoch auch denkbar, dass der zweite Abschnitt innerhalb des ersten Abschnitts 86 angeordnet ist und/oder gleitet.

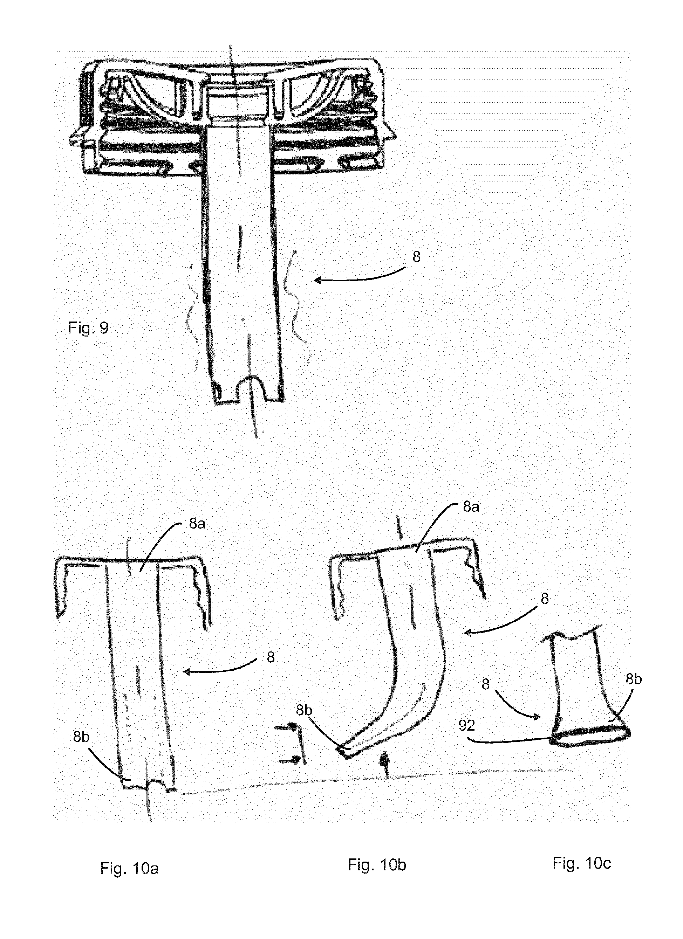

Figur 9 zeigt eine weitere Ausgestaltung der Leitungseinrichtung 8. Bei dieser Ausgestaltung ist die Leitungseinrichtung 8 in ihrer Gesamtheit beweglich ausgebildet und kann sich dabei - wie in den Figuren 10a, 10b und 10c - jeweils wegbewegen. Dabei zeigt Figur 10a einen Normalzustand der Leitungseinrichtung auf, d.h. bevor die Leitungseinrichtung an dem Boden des Behältnisses anschlägt. Bei der in Figur 10b gezeigten Ausgestaltung biegt sich der untere Teil der Leitungseinrichtung weg, so dass auf diese Weise die Leitungseinrichtung zwar immer noch am Boden des Behältnisses anliegt, jedoch auch nicht die Kompression des Behältnisses behindert. Figur 10c zeigt die Ansicht der verformten Leitungseinrichtung von Fig. 10b von links betrachtet.

Alternativ könnte die Leitungseinrichtung 8 (insbesondere oval) im Originalzustand wie in Fig. 10b dargestellt im unteren Bereich bereits leicht vorgebogen sein, um während des Entleervorgangs sicher zur Seite gebogen und nicht durch Verklemmen am Behälterboden undefiniert gestaucht oder geknickt zu werden.

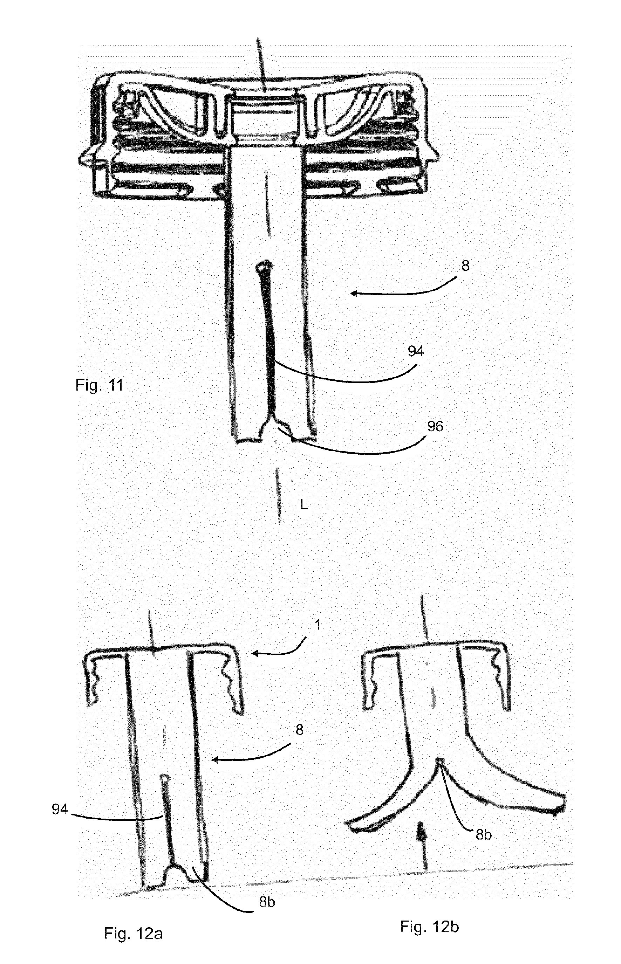

Bei der in Figur 11 gezeigten Ausführungsform weist die Leitungseinrichtung 8 eine längsförmige Schwachstelle / Aufreißlinie 94 auf. Dieser Schlitz 94 reicht dabei bis in den Endabschnitt der Leitungseinrichtung 8 bzw. bis in eine Ausnehmung 96. Allerdings sollte diese Schwachstelle bzw. Aufreißlinie nicht vollständig bis zu dem Anfangsbereich der Leitungseinrichtung reichen, da sie sonst zu früh komplett aufreißen könnte und dies wiederum zu einem Entweichen von Kopfraumgas führen könnte.

Figur 12a zeigt eine Situation, bei der die Leitungseinrichtung 8 noch ihre volle Länge aufweist, beispielsweise kurz bevor sie an dem Boden des Behältnisses anschlägt.

Bei der in Figur 12b gezeigten Situation spaltet sich die Leitungseinrichtung bei Berührung mit dem Boden auf und auch so ist eine weitere Komprimierung des Behältnisses möglich und gleichwohl noch ein Kontaktieren des jeweils unteren Endes bzw. Einlasses der Leitungseinrichtung an dem Boden bzw. einem Bereich des Bodens.

Die Figuren 13 sowie 14a und 14b zeigen nochmals die Anwendung einer Leitungseinrichtung in der Art eines Faltenbalgs. Dabei zeigt Figur 13a wiederum den gesamten Verschluss 1, wie oben erläutert, mit der Leitungseinrichtung 8 und das Bezugszeichen 82 den Faltenbalgbereich.

Die Figuren 14a und 14b zeigen zwei unterschiedliche Positionen der Leitungseinrichtung bzw. des Faltenbalgs, wobei bei der in Figur 14b gezeigten Darstellung die Länge beispielsweise durch das Anschlagen an dem Behältnisboden reduziert ist.

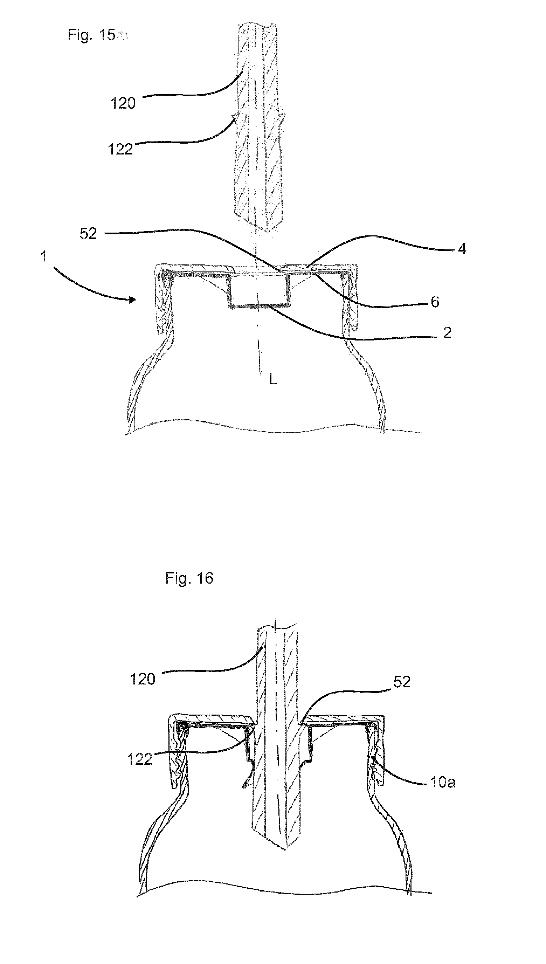

Figur 15 zeigt eine weitere Ausführungsform der erfindungsgemäßen Vorrichtung. Bei dieser Ausführungsform weist der Verschluss ein Arretiermittel 52 auf, welches dazu dient, bei einer in dem Verschluss bzw. in das Behältnis eingeschobenen Einstecheinrichtung 120 ein Rückziehen derselben zu verhindern. Dieses Arretiermittel 52 ist hier als umlaufender insbesondere kantiger Rand ausgebildet, der an dem Grundkörper 4 angeordnet ist. Dieser Rand 52 wird von einem an der Anstecheinrichtung 120 angeordneten ebenfalls umlaufenden Vorsprung 122 umgriffen. Man erkennt, dass dieser Vorsprung 122 eine Einführschräge aufweist um so kurzzeitig über den Rand 52 (in das Behältnis hinein) geschoben werden zu können.

Figur 16 zeigt eine Darstellung, bei der die Einstecheinrichtung 120 in das Behältnis eingeschoben ist. Man erkennt auch hier wieder den umlaufenden Vorsprung 122, der an der Anstecheinrichtung angeordnet ist. Man erkennt, dass dieser Vorsprung an dem Arretiermittel 52 anliegt und damit nunmehr die Einstecheinrichtung nicht mehr aus dem Behältnis herausgezogen werden kann.

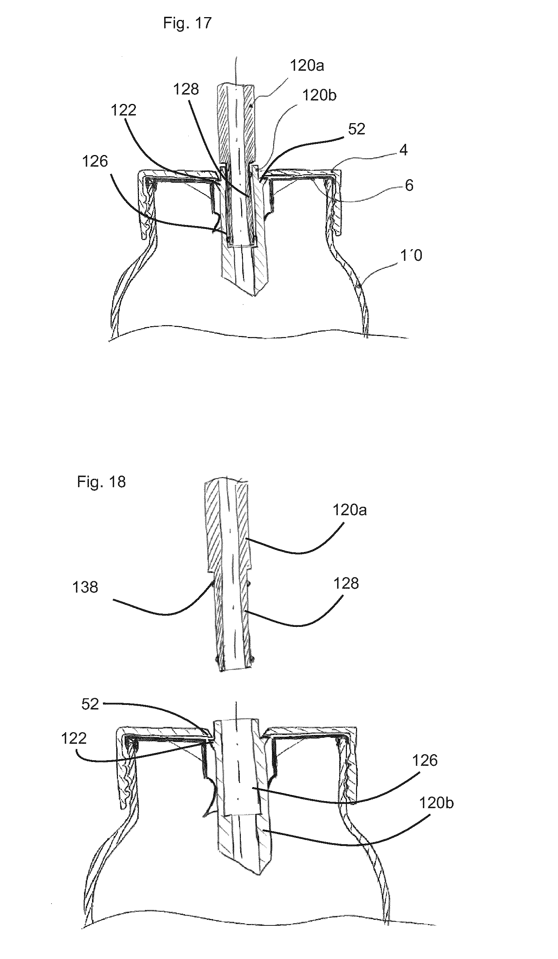

Figur 17 zeigt eine weitere Ausführungsform der erfindungsgemäßen Vorrichtung. Bei dieser Ausführungsform ist die Einstecheinrichtung zweiteilig ausgebildet, und weist einen oberen Abschnitt 120a sowie einen unteren Abschnitt 120b auf. Der umlaufende Vorsprung 122 ist hier an dem Abschnitt 120b angeordnet. Der Teilabschnitt 120a weist einen Vorsprung bzw. ein Endstück 128 auf, welches in eine Ausnehmung 126, welche in dem Abschnitt 120 gebildet ist, einfügbar ist.

Figur 18 zeigt die Darstellung, bei der die Einstecheinrichtung wieder aus dem Behältnis abgezogen wurde. Man sieht, dass hier der erste Abschnitt 120a herausgezogen wurde und der zweite Abschnitt 120b in dem Behältnis verbleibt, da er nach wie vor von dem Arretiermittel 52 gehalten wird.

Das Bezugszeichen 138 kennzeichnet an dem ersten Abschnitt 120 angeordnete Dichtungseinrichtungen, die beispielsweise als O-Ringe ausgeführt sein können. Weiterhin wäre es jedoch auch möglich, dass ein weiteres Befestigungsmittel vorgesehen ist, welches die beiden Abschnitte 120a und 120b aneinander befestigt. So könnte beispielsweise an dem Bereich bzw. Endstück 128 ein (nicht gezeigter) umlaufender Vorsprung vorgesehen sein, der in eine entsprechende (nicht gezeigte) Ausnehmung in dem zweiten Teilabschnitt 120b eingreift. Dabei könnten dieser Vorsprung und diese Ausnehmung derart aufeinander angepasst sein, dass zwar ein gewisser Halt ermöglicht wird, jedoch kein so starker Halt, wie er auch durch das Arretiermittel 52 bewerkstelligt wird. Auf diese Weise kann zwar ein Zusammenhalt der Einstecheinrichtung 120 während des Zapfvorgangs erreicht werden, andererseits jedoch gleichwohl sichergestellt werden, dass beim Abziehen des oberen Abschnitts 120a der untere Abschnitt 120b in dem Behältnis verbleibt.

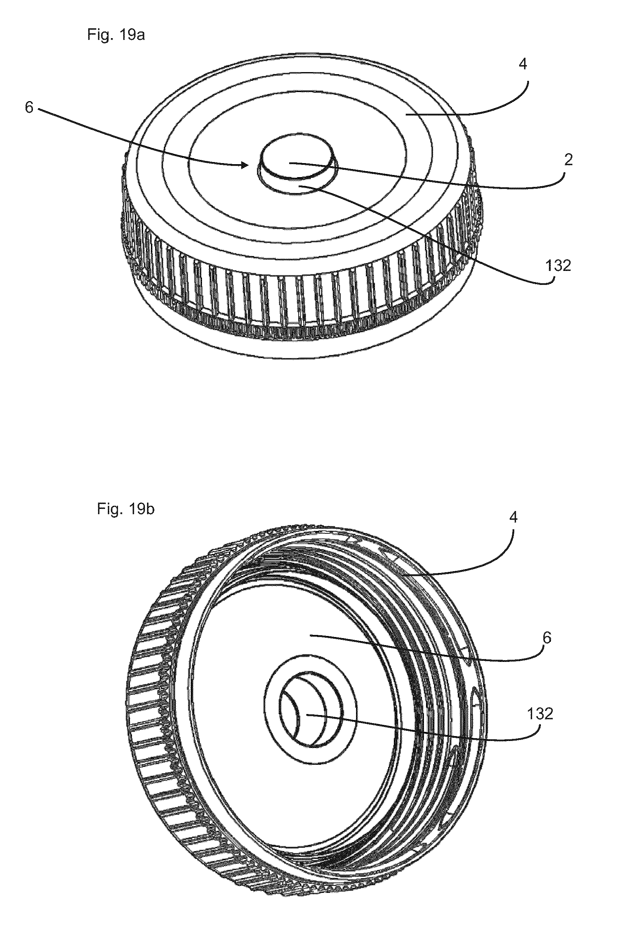

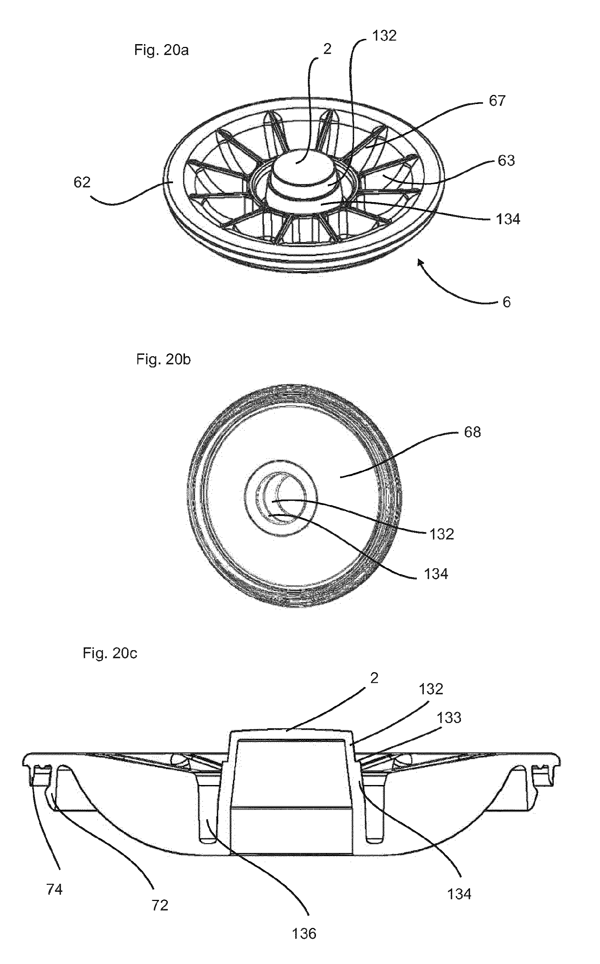

Die Figuren 19a und 19b zeigen zwei weitere Darstellungen eines Verschlusses 1 in einer weiteren Ausführungsform. Dabei zeigt Figur 19a eine Ansicht von oben. Man erkennt hier wiederum den Grundkörper 4 und den Einstechbereich 2, der aus dem Grundkörper 4 herausragt. Zu diesem Zweck weist der Verschließkörper einen Verbindungsabschnitt 132 auf, der den Einstechbereich 2 (der ebenfalls Bestandteil des Verschließkörpers ist) mit dem in Figur 19a nicht gezeigten Bauabschnitts 68 (vgl. Figur 20b) des Verschließkörpers verbindet. Dieser Verbindungsabschnitt 132 ragt durch eine Öffnung, die in dem Grundkörper 4 gebildet ist hindurch. Auf diese Weise liegt der Einstechbereich bei aufrecht stehenden Behältnissen etwas höher als die Oberfläche des Grundkörpers.

In Figur 19b ist ebenfalls dieser Verbindungsabschnitt 132 erkennbar, der sich durch die besagte Öffnung in dem Grundkörper 4 hindurch erstreckt.

Die Figuren 20a bis 20c zeigen drei Darstellungen des Verschließkörpers 6. Dieser Verschließkörper 6 ähnelt dem auch etwa in Figur 6 gezeigten Verschließkörper, beispielsweise hinsichtlich der Stege 63 sowie auch des umlaufenden Ringkörpers 62. Die entscheidende Modifikation ist jedoch die Anordnung des Einstechbereichs 2. Dieser wird über den Verbindungsabschnitt 132 und einen weiteren Verbindungsabschnitt 134 an dem Basisabschnitt des Verschließkörpers 6 angeordnet. In Figur 20b sind ebenfalls der Verbindungsabschnitt 132 sowie der weitere Verbindungsabschnitt 134 erkennbar. In Figur 20c erkennt man, dass der Verbindungsabschnitt 132, der sich durch die Öffnung des Grundkörpers hindurcherstreckt einen etwas geringeren Querschnitt bzw. Umfang aufweist als der weitere Verbindungsabschnitt 134. Zwischen diesen beiden Verbindungsabschnitten 132 und 134 ist eine Stufe 133 gebildet, die letztlich zum Abstützen bzw. Abdichten an dem Grundkörper dient. Daneben sind auch in Figur 20c wieder die bereits oben erläuterten Vorsprünge bzw. Dichtlippen 72, 74 dargestellt.

Man erkennt, dass eine Ebene, welche durch die Ränder der Stege 63 gebildet wird, hier trichterförmig um die Mitte hin verläuft. Der Anstechbereich ragt jedoch aus dieser Ebene heraus. Genaue ragt der Anstechbereich auch über alle übrigen Bereiche des Verschließkörpers hinaus und insbesondere auch über den Rand 62 hinaus.

Bevorzugt ist der Anstechbereich 2 in einem (bei aufrecht stehenden Behältnis) vertikalen Abstand zu dem Grundkörper ausgebildet, der zwischen 0,5mm und 5cm, bevorzugt zwischen 1 mm und 4cm, bevorzugt zwischen 2mm und 3cm liegt.

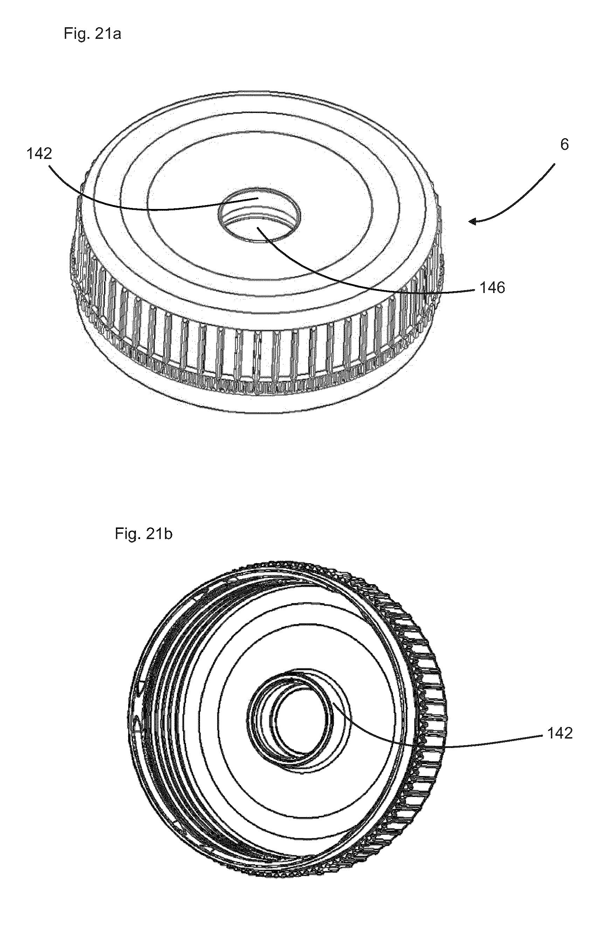

Die Figuren 21 a und 21 b zeigen zwei Darstellungen des Grundkörpers von oben und unten. Man erkennt hier eine umlaufende Wandung 142, an der in einem zusammengesetzten Zustand der Verbindungsabschnitt 134 anliegen kann. Das Bezugszeichen 146 kennzeichnet die Öffnung des Grundkörpers, durch welche der Verbindungsabschnitt 132 (und der Anstechbereich 2) hindurchgeschoben wird. Bei der in Figur 21b gezeigten Darstellung ist die ebenfalls wieder ringförmige Wandung 142 dargestellt. Dieser Wandabschnitt 142 dient dabei auch als Führung für und/oder Stütze für die Einstecheinrichtung 120.

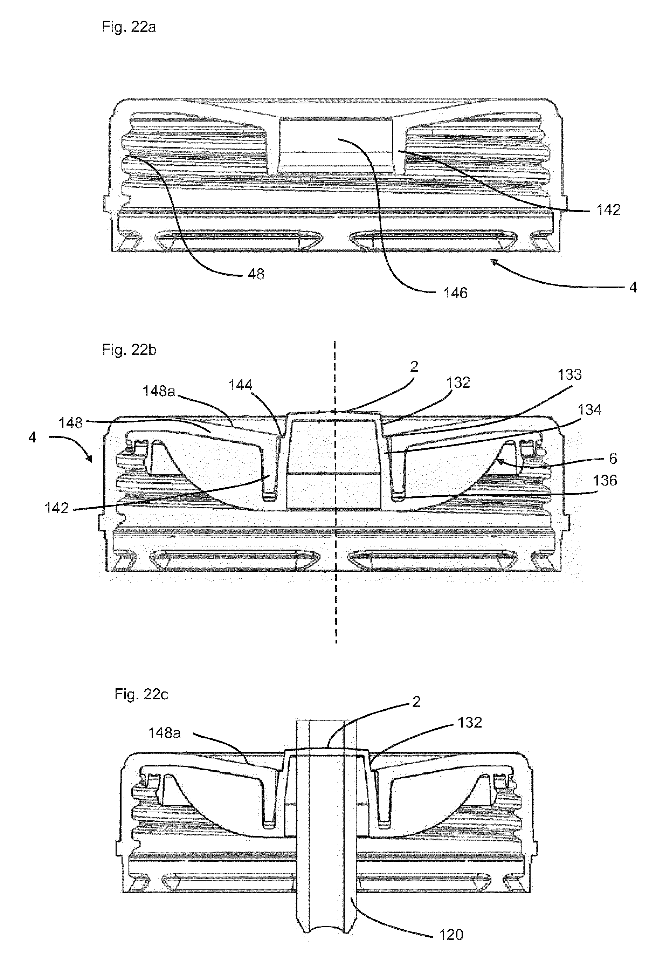

Figur 22a zeigt eine Schnittdarstellung des Grundkörpers 6. Auch hier ist wieder die Öffnung 146 erkennbar so wie auch der ringförmige Abschnitt 142 und das Innengewinde 48. Der ringförmige Körper bzw. Wandabschnitt 142 erweitert sich hier leicht nach unten hin. Bei der in Figur 22b gezeigten Darstellung sind der Grundkörper 4 und der Verschließkörper 6 aneinander angeordnet. Um das Verständnis zu erleichtern sind die rechts der gestrichelten Linie gezeigten Bezugszeichen auf dem Verschließkörper 6 bezogen und die linksseitig angeordneten Bezugszeichen auf den Grundkörper 4. Man erkennt, dass der Grundkörper 4 nicht nur den ringförmigen oben erläuterten Abschnitt 142 aufweist, sondern auch einen Vorsprung bzw. Dichtvorsprung 144, der ebenfalls umlaufend ausgebildet ist. Dieser Vorsprung liegt an der Stufe 133, die zwischen den Verbindungsabschnitt 132 und den Verbindungsabschnitt 134 ausgebildet wird, an, sodass auf diese Weise eine Abdichtung erreicht werden kann. Das Bezugszeichen 136 kennzeichnet eine hier ebenfalls ringförmige Ausnehmung, in welche im zusammengesetzten Zustand der ringförmige Vorsprung 142 des Grundkörpers 4 eingreift.

Figur 22c zeigt schließlich eine Darstellung, bei der auch eine Einstecheinrichtung 120 in den Verschluss eingefügt ist. Dabei erkennt man, dass die Anstecheinrichtung den Anstechbereich 2 durchstoßen hat. Auch erkennt man in den in den Figuren 22a bis 22c gezeigten Darstellungen, dass der Grundkörper einen Abschnitt 148 aufweist, an dem der umlaufende Vorsprung 142 angeordnet ist und dieser Abschnitt 148 hier kegelförmig nach innen verläuft. Gleichwohl ist der Anstechbereich 2 bei aufrecht stehenden Behältnis oberhalb einer Oberfläche bzw. einer Außenoberfläche 148 a des Grundkörpers 4 angeordnet.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Verschluss
- 2: Anstechbereich
- 4: Grundkörper
- 6: Verschließkörper
- 8: Leitungseinrichtung
- 8a: Anfangsabschnitt der Leitungseinrichtung 8
- 8b: Endabschnitt der Leitungseinrichtung 8
- 10: Behältnis
- 10a: Mündung des Behältnisses
- 44: Vorsprung
- 48: Innengewinde
- 52: Arretiermittel
- 62: ringförmiges Anlegesegment
- 63: Stege
- 64, 66: umlaufende Vorsprünge
- 67: umlaufender Ringkörper
- 68: gekrümmter Bereich
- 72: Vorsprung, Dichtlippe
- 74: weiterer ringförmiger Vorsprung
- 82: faltbarer Bereich der Leitungseinrichtung
- 86: erster Abschnitt der Leitungseinrichtung
- 88: zweiter Abschnitt der Leitungseinrichtung
- 92: unterer Abschnitt der Leitungseinrichtung
- 94: Schlitz
- 96: Ausnehmung
- 101: Verschluss (Stand der Technik)
- 120: Anstecheinrichtungl
- 120a,b: (trennbare) Abschnitte der Einstecheinrichtung
- 122: Vorsprung
- 126: Ausnehmung
- 128: Endstück
- 132: Verbindungsabschnitt
- 133: Stufe zwischen Verbindungsabschnitten
- 134: Verbindungsabschnitt
- 136: (ringförmige) Ausnehmung
- 138: Dichtungseinrichtung
- 142: Wandung (Führungseinrichtung für Einstecheinrichtung)
- 144: Dichtvorsprung
- 146: Öffnung in Grundkörper
- 148: Abschnitt des Grundkörpers
- 148a: Außenoberfläche des Abschnitts 148

- L: Längsrichtung

## Patentansprüche

1. Verschluss (1), für Behältnisse (10), insbesondere für Kunststoffbehältnisse mit einem Aufnahmebereich zum Aufnehmen eines Mündungsabschnitts (10a) des Behältnisses, und mit einem Anstechbereich (2), der dazu geeignet und bestimmt ist, von einer Einstecheinrichtung (120) in einer vorgegebenen Einstechrichtung (L) durchstochen und durchdrungen zu werden,
**dadurch gekennzeichnet, dass**
der Verschluss (1) mehrteilig ausgebildet ist und einen Grundkörper (4) aufweist, der an einer Mündung (10a) des Behältnisses (10) befestigbar ist, sowie einen an diesem Grundkörper (4) angeordneten Verschließkörper (6), der den Anstechbereich (2) ausbildet, wobei sich der Grundkörper (4) und der Verschließkörper (6) wenigstens hinsichtlich ihrer Flexibilität in einer Einstechrichtung unterscheiden.

2. Kunststoffverschluss (1) nach Anspruch 1,
**dadurch gekennzeichnet, dass**
der Kunststoffverschluss eine Leitungseinrichtung (8) aufweist, welche sich an den Anstechbereich (2) anschließt.

3. Kunststoffverschluss (1) nach Anspruch 2,
**dadurch gekennzeichnet, dass**
die Leitungseinrichtung (8) einen Anfangsabschnitt (8a) aufweist, der sich an den Anstechbereich (2) anschließt sowie einen Endabschnitt, über den Flüssigkeit in die Leitungseinrichtung gelangen kann, wobei ein Abstand zwischen dem Anfangsabschnitt (8a) und dem Endabschnitt (8b) veränderbar ist.

4. Kunststoffverschluss (1) nach Anspruch 2,
**dadurch gekennzeichnet, dass**
die Leitungseinrichtung (8) biegbar und/oder teleskopierbar ist und/oder faltbar ist.

5. Kunststoffverschluss (1) nach wenigstens einem der vorangegangenen Ansprüche,
**dadurch gekennzeichnet, dass**
der Grundkörper (4) und der Verschließkörper (6) aus unterschiedlichen Materialien gefertigt sind.

6. Kunststoffverschluss (1) nach wenigstens einem der vorangegangenen Ansprüche,
**dadurch gekennzeichnet, dass**
der Grundkörper (4) ein Gewinde (48) und insbesondere ein Innengewinde aufweist.

7. Kunststoffverschluss (1) nach wenigstens einem der vorangegangenen Ansprüche,
**dadurch gekennzeichnet, dass**
der Verschließkörper (6) ein ringförmiges Anlagesegment (62) aufweist, welches an dem Grundkörper (4) anliegt.

8. Kunststoffverschluss (1) nach wenigstens einem der vorangegangenen Ansprüche,
**dadurch gekennzeichnet, dass**
der Grundkörper (4) einen ersten ringförmigen sich wenigstens auch in der Einstechrichtung (L) erstreckenden Vorsprung (44) aufweist, und der Verschließkörper (6) einen zweiten ringförmigen sich wenigstens auch in der Einstechrichtung (L) erstreckenden Vorsprung (64) aufweist, wobei der erste Vorsprung (44) und der zweite Vorsprung (64) in einem Zustand, in dem der Verschließkörper (6) an dem Grundkörper (4) angeordnet ist, aneinander anliegen.

9. Kunststoffverschluss (1) nach Anspruch 8,
**dadurch gekennzeichnet, dass**
der Verschließkörper (6) einen dritten sich wenigstens auch in der Einstechrichtung erstreckenden Vorsprung (66) aufweist.

10. Kunststoffverschluss (1) nach Anspruch 9,
**dadurch gekennzeichnet, dass** der erste Vorsprung (44) zwischen dem zweiten Vorsprung (64) und dem dritten Vorsprung (66) angeordnet ist.

11. Kunststoffverschluss (1) nach wenigstens einem der vorangegangenen Ansprüche,
**dadurch gekennzeichnet, dass**
der Kunststoffverschluss ein Arretiermittel (52) aufweist, welches in wenigstens einer Position der Einstecheinrichtung (120) gegenüber dem Kunststoffverschluss eine Relativbewegung der Einstecheinrichtung (120) gegenüber dem Kunststoffverschluss in einer vorgegebenen Bewegungsrichtung und insbesondere entgegen der Einstechrichtung verhindert.

12. Kunststoffverschluss (1) nach Anspruch 11,
**dadurch gekennzeichnet, dass**
das Arretiermittel (52) an dem Grundkörper (4) ausgebildet ist.

13. Kunststoffverschluss (1) nach wenigstens einem der vorangegangenen Ansprüche,
**dadurch gekennzeichnet, dass**
der Anstechbereich (2) wenigstens abschnittsweise oberhalb einer Außenoberfläche des Grundkörpers (4) angeordnet ist.

14. Kunststoffverschluss (1) nach wenigstens einem der vorangegangenen Ansprüche,
**dadurch gekennzeichnet, dass**
der Grundkörper (4) eine Öffnung (146) aufweist, welche zur Durchführung der Einstecheinrichtung (120) geeignet und bestimmt ist und wenigstens ein Abschnitt (132) des Verschließkörpers (6) sich durch diese Öffnung (146) hindurch erstreckt.

15. Kunststoffbehältnis (10) mit einem daran angeordneten Kunststoffverschluss nach wenigstens einem der vorangegangenen Ansprüche, wobei das Kunststoffbehältnis (10) in seiner Längsrichtung (L) komprimierbar ist, um durch eine derartige Kompression in dem Kunststoffbehältnis befindliche Flüssigkeit aus dem Behältnis zu drängen.
